# EUROPÄISCHE PATENTSCHRIFT

(11) **EP 1 456 003 B1**
(45) Veröffentlichungstag und Bekanntmachung des Hinweises auf die Patenterteilung: **02.01.2008**
(21) Anmeldenummer: 02790417.6
(22) Anmeldetag: 21.11.2002
(51) Int. Cl.: B29C 47/12, B29C 47/14, B29C 47/04, B29C 47/06

(54) **EXTRUSIONSDÜSE FÜR FOLIEN ODER PLATTEN MIT SEITLICHER SCHMELZEEINSPEISUNG**
LATERAL MELT FEED EXTRUSION NOZZLE FOR FILMS OR SLABS
FILIERE D'EXTRUSION POUR FILMS OU PLAQUES A ALIMENTATION LATERALE EN MATIERE FONDUE

(30) Priorität: 18.12.2001 DE 10162353
(43) Veröffentlichungstag der Anmeldung: 15.09.2004
(73) Patentinhaber: Evonik Röhm GmbH, 64293 Darmstadt (DE)
(72) Erfinder: LORENZ, Hans, 64291 Darmstadt (DE); SCHUCHMANN, Roland, 64372 Ober-Ramstadt (DE); KROHMER, Christoph, 64589 Stockstadt (DE)
(74) Vertreter: Gottschalk, Michael
(86) Internationale Anmeldenummer: PCT/EP2002/013045
(87) Internationale Veröffentlichungsnummer: WO 2003/051608

(56) Entgegenhaltungen:
- CH-A- 288 512
- US-A- 2 602 187
- US-A- 3 469 281
- US-A- 4 880 370
- US-A- 5 211 898

## Beschreibung

Die Erfindung betrifft eine Extrusionsdüse für Folien oder Platten mit seitlicher Schmelzeeinspeisung sowie ein entsprechendes Herstellungsverfahren.

### Stand der Technik

Extrusionsdüsen zur Formgebung von extrudierten Schmelzen aus thermoplastischen Kunststoffen zu Folien- oder Plattenbahnen, bestehend im wesentlichen aus dem Düsenkörper, einer mittigen Öffnung zur Schmelzeeinspeisung in einen Verteilerkanal mit einer Stauinsel und einem breitschlitzförmigen Düsenaustrittsbereich sind bekannt.

Extrusionsdüsen für Rundquerschnitte, wie Rohre oder Blasformlinge mit seitlicher Schmelzeeinspeisung sind z. B. bekannt (s. z. B. Winter, H. H. (1986) Polymer Engineering Science 26/8, S.543 - 553, EP-A 0 876 895, US 4 344. 907).

Extrusionsdüsen zur Extrusion von flachen Bahnen aus thermoplastischen Kunststoffen sind bekannt z. B. aus DE-A 4 220 839. Entsprechende Düsen weisen Verteilerkanäle aus, die in der Aufsicht die Gestalt eines Kleiderbügels oder eines Fischschwanzes haben. Die Öffnung zur Schmelzeeinspeisung verbreitert dabei beidseitig zu einem Verteilerkanal, der die Breite des gewünschten folien- oder plattenförmigen Extrudats aufweist. Im Verteilerkanal befindet sich eine Stauinsel, die den Schmelzestrom so staut, daß über die gesamte Breite ein annähernd gleichmäßige Schmelzeverteilung erreicht wird.

Eine gattungsbildende Extrusionsdüse wird in US 4,880,370 offenbart.

Die geometrische Auslegung des Verteilerkanals erfolgt durch theoretische Überlegungen mit Hilfe entsprechender Rechenprogramme.

Im Falle der Coextrusion werden zwei oder mehrere Schmelzeströme vereinigt, wobei das Aufsetzen einer zusätzlichen Schmelzeschicht in der Regel mit Hilfe sogenannter Verteilerwerkzeuge reguliert wird. Adapter sind z. B. bekannt aus DE-OS 37 41 793. Es handelt sich dabei um austauschbare ein- oder mehrteilige Schieber, deren Profil zuvor dem gewünschten Verteilungsprofil angepaßt wurde. Lamellenadapter sind z. B. bekannt aus EP 0 418 681 A2. Hier kann das Extrusionsprofil in der Breite durch eine Vielzahl von Stellgliedern, sogenannte Lamellen beeinflußt werden. Die Regelung kann über eine Regelkreis erfolgen, der anhand am Extrusionsprodukt gemessener Schichtdicken und Auflagenbreiten, die Stellung der Lamellen als auch den Durchsatz des Extruders regelt.

Die Anpassung der Verteilung mittels Verteilerwerkzeugs erfolgt durch auf der Oberseite des Extrusionswerkzeugs zugängliche Stellelemente, die Bestandteil des Verteilerwerkzeugs sind. Dabei kann es sich um z. B. um Bolzen, Dehnbolzen oder Piezotranslatoren handeln (s. z. B. EP 0 418 681 A2).

Im Düsenausgangsbereich kann der Extrudatquerschnitt zusätzlich mit Hilfe von Profilwerkzeugen, sogenannten Flexlippen oder Superflexlippen reguliert werden (s. z. B. EP-A 435 078, EP-A 367 022, EP-A 484 841)

### Aufgabe und Lösung

Extrusionsdüsen zur Extrusion von flachen Bahnen aus thermoplastischen Kunststoffen weisen in der Regel Verteilerkanäle mit mittiger Schmelzeseinspeisung auf, die in der Aufsicht die Gestalt eines Kleiderbügels oder eines Fischschwanzes haben. Bei fachgerechter Auslegung werden damit für viele Anwendung gute Ergebnisse sowohl bei der Einfachextrusion als auch bei der Coextrusion erzielt.

Schwierigkeiten werden jedoch bei der Extrusion von thermoplastischen Kunststoffen festgestellt, die in sichtbarer Weise Füllstoffe, wie z. B. BaSO₄ Partikel, aufweisen. Durch die unterschiedlichen Strömungsverhältnisse im Verteilerkanal ist eine teilweise Entmischung der eingespeisten Schmelze mit zunächst noch homogen verteiltem Füllstoff praktisch unvermeidbar. Diese Entmischungen führen dazu, daß die Füllstoffe im Mittenbereich der erhaltenen Extrudate in optisch sichtbarer Weise ausgedünnt oder angereichert werden und sich zugleich in den Randbereichen anreichern oder ausdünnen. Dies ist natürlich unerwünscht, da man eine homogene Verteilung erreichen möchte.

Der vorliegenden Erfindung liegt die Aufgabe zugrunde, füllstoffhaltige Folien und Platten auf dem Wege der Extrusion oder Coextrusion bereitzustellen, bei denen Füllstoffverteilung im Endprodukt weitgehend gleichmäßig vorliegt.

Da die Schichtdickenverteilung coextrudierter Schichten mit herkömmlichen Extrusionsdüsen mit mittiger Schmelzeeinspeisung auch bei fachgerechter Auslegung des Verteilerkanals nie völlig gleichmäßig ist und daher stets weiter verbessert werden kann, liegt der vorliegenden Erfindung die weitere Aufgabe zugrunde, die Schichtdickenverteilung bei der Coextrusion von Folien und Platten gleichmäßiger zu gestalten und in dieser Hinsicht verbesserte Produkte bereitzustellen.

Die genannten Aufgaben werden gelöst durch eine Extrusionsdüse nach Anspruch 1 und einem Verfahren nach Anspruch 5.

Die erfindungsgemäße Extrusionsdüse kann in den an sich bekannten Verfahren zur Herstellung von Folien oder Platten aus thermoplastischem Kunststoff in sich bekannter Weise durch Extrusion oder Coextrusion eingesetzt werden.

Durch das erfindungsgemäße Verfahren sind extrudierte Folien oder Platten aus thermoplastischen Kunststoff erhältlich, die einen partikulären Füllstoff enthalten, wobei die Konzentration des Füllstoffs, bezogen auf den Bahnquerschnitt, in der Mitte der äußeren Drittel der Folien- oder Plattenbahn und im Mittenbereich der extrudierten Bahn um nicht mehr als +/- 15 %, bevorzugt nicht mehr als +/- 10 %, besonders bevorzugt nicht mehr als +/- 3 % oder sogar nicht mehr als +/- 1 % abweicht.

Es sind weiterhin erfindungsgemäß coextrudierte Folien oder Platten aus thermoplastischen Kunststoff erhältlich, bei denen die Schichtdicke der Schichten, bei denen die Schmelzeeinspeisung in den Verteilerkanal seitlich in Bezug auf die durch den Düsenaustrittsbereich vorgegebene Extrusionsrichtung erfolgt, bezogen auf den Bahnquerschnitt, in der Mitte der äußeren Drittel der Folien- oder Plattenbahn und im Mittenbereich der Bahn um nicht mehr als +/- 15 %, bevorzugt nicht mehr als +/- 10 %, besonders bevorzugt nicht mehr als +/- 3 % oder sogar nicht mehr als +/- 1 % abweicht.

Durch die seitliche Einspeisung wird erreicht, daß die Schmelze insgesamt nur in einer Richtung, nach rechts oder nach links, umgelenkt wird. Überraschenderweise werden dadurch insgesamt im Vergleich zum Stand der Technik offenbar gleichmäßigere Strömungsverhältnisse erzielt. Diese Wirkung zeigt sich vorteilhaft daran, daß die bekannte Entmischung bei füllstoffhaltigen Schmelzen weitgehend unterbleibt oder sich in die äußeren Randbereiche, z. B. 10 % der Breite von den äußeren Rändern ausgehend, verlegt, die durch Randbeschnitt abgetrennt werden können. Als ein weiterer Vorteil wird festgestellt, daß mittels der erfindungsgemäßen Extrusionsdüse bei der Coextrusion von Folien oder Platten gleichmäßigere Schichtdickenverteilungen erreichen lassen, als dies bisher möglich war.

### Ausführung der Erfindung

### Extrusionsdüse

Die Erfindung betrifft eine Extrusionsdüse zur Formgebung von extrudierten Schmelzen aus thermoplastischen Kunststoffen zu Folien- oder Plattenbahnen.

Diese besteht im wesentlichen aus dem Düsenkörper, mindestens einer Öffnung zur Schmelzeeinspeisung in einen Verteilerkanal mit mindestens einer Stauinsel (4) und einem breitschlitzförmigen Düsenaustrittsbereich.

Die Extrusionsdüse kann insgesamt mehrere voneinander unabhängige Verteilerkanäle aufweisen. Pro Verteilerkanal können eine oder mehrere Stauinseln vorhanden sein. Aus konstruktiven Gründen ist es häufig zweckmäßig, die seitlichen Düsenbereiche mit Seitenplatten, z. B. zur Verstärkung, Beheizung und Abdichtung, auszustatten.

Wesentliches Kennzeichen der Erfindung ist, daß die Schmelzeeinspeisung in Verteilerkanal seitlich in Bezug auf die durch den Düsenaustrittsbereich vorgegebene Extrusionsrichtung erfolgt. Es ist dabei unerheblich, an welcher Stelle des Düsenkörpers zunächst eingeleitet wird. Die Schmelze kann z. B. zunächst mittig in den Düsenkörper geführt werden und dann entsprechend umgelenkt werden, so daß sie seitlich in den Verteilerkanal eingespeist wird.

Die Extrusionsdüse zeichnet sich dadurch aus, daß bezogen auf die Ebene eines Querschnitts durch den Düsenkörper, bevorzugt entsprechend der Ebene die durch größere Extrudatfläche gebildet wird und durch die Breite des Düsenaustritts und den Verteilerkanal verläuft, die Richtung der Schmelzeeinspeisung in Verteilerkanal und die Extrusionsrichtung einen Winkel von 30 bis 135 °, bevorzugt von 60 bis 120°, besonders bevorzugt von 80 bis 100 ° bilden. Günstig ist ein Winkel von z. B. 90 °.

Der Verteilerkanal hat die Form eines (halben) Kleiderbügel-Verteilerkanals.

Der Querschnitt des Verteilerkanals kann, rechteckig, oval, elliptisch oder eine Übergangsform der genannten Querschnitte aufweisen.

Bevorzugt, insbesondere bei Coextrusionsdüsen, wird der Verteilerkanalquerschnitt mit einem Aspektverhältnis von Kanalbreite zu Kanalhöhe von 3 bis 10 (Kanalbreite) zu 1 (Kanalhöhe), bevorzugt von 3,5 bis 7 zu 1, besonders bevorzugt von 4 bis 6 zu 1 gestaltet.

Es kann sich um eine Extrusionsdüse zur Extrusion einer einzigen Kunststoffschicht handeln (Einfachextrusion).

Es kann sich weiterhin um eine Coextrusionsdüse zur gleichzeitigen Extrusion mehrerer Kunststoffschichten, z. B. zwei, drei oder vier Schichten (oder in Einzelfällen sogar mehrere hundert Schichten), aufeinander handeln. Dabei erfolgt die Schmelzeeinspeisung in den Verteilerkanal zumindest bei einer der Kunststoffschichten, bevorzugt der oder einer außen liegenden Kunststoffschicht, seitlich in Bezug auf die durch den Düsenaustrittsbereich vorgegebene Extrusionsrichtung. Es kann in Einzelfällen aus Konstruktionsgründen zweckmäßig sein den Verteilerkanal einer weiteren Schicht, z. b. einer dicken Kernschicht bei einer Platte, die mit einer dünneren Zusatzschicht versehen werden soll, in bekannter Weise mittig mit einer mittig angeordneten Schmelzeeinspeisung zu versehen. Bevorzugt werden alle Verteilerkanäle erfindungsgemäß seitlich ausgelegt, insbesondere wenn sie Polymere mit zur Entmischung neigenden Füllstoffen oder coextrudierte Schichten verteilen sollen. Dabei kann es aus konstruktiven Gründen zweckmäßig sein, die Kanäle jeweils von verschiedenen Seiten einzuspeisen.

Die Extrusionsdüse kann in an sich bekannter Weise bei Auslegung als Coextrusionsdüse mit einem Verteilerwerkzeug ausgestattet werden. Es kann z. B. ein Lamellenadapter verwendet werden. Gemäß EP 0 418 681 A2 kann das Extrusionsprofil in der Breite durch eine Vielzahl von Stellgliedern, sogenannte Lamellen beeinflußt werden. Die Regelung kann über eine Regelkreis erfolgen, der anhand am Extrusionsprodukt gemessener Schichtdicken und Auflagenbreiten, die Stellung der Lamellen als auch den Durchsatz des Extruders regelt. Die Anpassung der Verteilung mittels Verteilerwerkzeugs erfolgt durch auf der Oberseite des Extrusionswerkzeugs zugängliche Stellelemente, die Bestandteil des Verteilerwerkzeugs sind. Dabei kann es sich um z. B. um Bolzen, Dehnbolzen oder Piezotranslatoren handeln (s. z. B. EP 0 418 681 A2).

Die Extrusionsdüse kann weiterhin im Düsenaustrittsbereich in an sich bekannter Weise mit einem Profilwerkzeug ausgestattet werden. Das Profilwerkzeug dient zur Feinregulierung des austretenden Schmelzeprofils, indem ein dünnwandig gestalteter Austrittsbereich unter Druckausübung von Stellelementen, z. B. um Bolzen, Dehnbolzen oder Piezotranslatoren, entsprechend verformt wird. Geeignet ist z. B. die Ausführung des Düsenausgangsbereichs als flexible Lippe oder als sogenannte "Supertlexlippe" (s. z. B. EP-A 435 078, EP-A 367 022, EP-A 484 841) oder als Membran (Groß et al. (Kunststoffe 84 (1994) 10, S. 1352 - 1358)

### Verfahren

Die erfindungsgemäße Extrusionsdüse kann in den an sich bekannten Verfahren zur Herstellung von Folien oder Platten aus thermoplastischem Kunststoff in sich bekannter Weise durch Extrusion oder Coextrusion eingesetzt werden.

Dazu wird thermisch plastifizierte Schmelze bei der Einfachextrusion über einen bzw. bei der Coextrusion über mehrere Extruder eingespeist. Zwischen Extruder und Extrusionsdüse können in an sich bekannter Weise zusätzliche Vorrichtungen wie z. B. eine Schmelzepumpe oder ein Schmelzefilter angeordnet sein. Die extrudierten Bahnen können anschließend einem Glattwerk oder einer Kalibriereinrichtung zugeführt werden. Folien können z. B. über einzelne gekühlte Walzen im sogenannten "Chill-Roll" Verfahren geführt. werden.

Je nach Kunststoff liegen die Verarbeitungstemperaturen im Bereich von 150 bis 320 °C. Polymethylmethacrylat-Kunststoffe können z. B. im Bereich von 180 bis 300 °C verarbeitet werden.

### Folien und Platten

Folien können z. B. eine Dicke im Bereich von 5 bis 250 µm aufweisen. Platten können eine Dicke im Bereich von 0,1 mm bis 100 mm haben. Die Breiten der extrudierten Bahnen können z. B. von 100 mm bis 4000 mm liegen.

Extrudierte oder coextrudierte Folien oder Platten können z. B. aus einem Polymethacrylat-Kunststoff, einem schlagzäh modifizierten Polymethylmethacrylat-Kunststoff, einem Polycarbonat-Kunststoff, einem Polystyrol-Kunststoff, einem Styrol-Acryl-Nitril-Kunststoff, einem Polyethylentherephthalat-Kunststoff, einem glykolmodifizierten Polyethylentherephthalat-Kunststoff, einem Polyvinylchlorid-Kunststoff, einem transparenten Polyolefin-Kunststoff, einem Acrylnitril-Butadien-Stryrol (ABS)-Kunststoff oder aus Kombinationen oder Mischungen (Blends) der genannten Kunststoffe bestehen.

Bevorzugt sind Polymethylmethacrylat-Kunststoffe mit einem Methylmethacrylat-Monomeranteil von mindestens 80, bevorzugt mindestens 90 Gew.-% und gegebenenfalls 0 bis 20, bevorzugt 0 bis 10 Gew.-% weiterer vinylisch copolymerisierbarer Monomere wie z. B. C₁- bis C₈-Alkylestern der Acrylsäure oder der Methacrylsäure, z. B. Methylacrylat, Ethylacrylat, Butylacrylat, Butylmethacrylat, Hexylmethacrylat, Cyclohexylmethacrylat, Styrol und Styrolderivate, wie beispielsweise α-Methylstyrol oder p-Methylstyrol. Weitere Monomere können sein Acrylsäure, Methacrylsäure, Maleinsäureanhydrid , Hydroxyester der Acrylsäure oder der Methacrylsäure etc..

### Füllstoffhaltige Folien oder Platten

Extrudierte Folien oder Platten aus thermoplastischen Kunststoff, die einen partikulären Füllstoff z. B. in Korngrößen von 1 µm bis 10 mm, bevorzugt von 3 bis 50 µm, besonders bevorzugt 5 - 20 µm enthalten, können unter Verwendung der erfindungsgemäß Extrusionsdüse in vorteilhafter Weise hergestellt werden.

Bei extrudierten Folien oder Platten aus thermoplastischen Kunststoff, die einen partikulären Füllstoff enthalten, ist die Konzentration des Füllstoffs in den Schichten, bei denen die Schmelzeeinspeisung in den Verteilerkanal seitlich in Bezug auf die durch den Düsenaustrittsbereich vorgegebene Extrusionsrichtung erfolgt, sehr gleichmäßig. Bezogen auf den Bahnquerschnitt weicht die Füllstoffkonzentration in der Mitte der äußeren Drittel der Folien- oder Plattenbahn bzw. der füllstoffhaltigen erfindungsgemäß extrudierten Schichten, und im Mittenbereich der extrudierten Bahn um nicht mehr als +/-15 %, bevorzugt nicht mehr als +/- 10 %, besonders bevorzugt nicht mehr als +/- 3 % oder sogar nicht mehr als +/- 1 % ab. Der Bahnquerschnitt ist der Querschnitt quer zur Extrusionsrichtung.

Die Abweichung kann ermittelt werden, indem man den kleineren Meßwert gleich 100 % setzt. Meist ist dies der in Bahnmitte gemessene Meßwert, da sich der Füllstoff dort eher ausdünnt. Diese Beziehung gilt auch für Folien- oder Plattenbahnen, bei denen nachträglich ein gewisser Randbeschnitt, z. B. bis zu 15 % von beiden Seiten her vorgenommen wird, da stets der besonders kritische Bereich in der Mitte der Kunststoffbahn mit den eher weniger kritischen Randbereichen verglichen wird.

Die Abweichung kann also ermittelt werden, indem man die Folien- oder Plattenbahn über die Breite in drei etwa gleiche Teile teilt und die Füllstoffkonzentration einer Probe aus der Mitte des mittleren Drittels mit der Füllstoffkonzentration einer Probe aus der Mitte eines der äußeren Drittel vergleicht, wobei der kleinere Meßwert gleich 100 % gesetzt wird.

Die Füllstoffkonzentrationen im Kunststoff können in Anhängigkeit vom jeweils enthaltenen Füllstoff mit geeigneten analytischen Methoden ermittelt werden, die den Fachmann geläufig sind. Es können genormte Methoden wie auch nicht genormte bzw. anderweitig validierte Methoden angewendet werden. Geeignete Methoden sind z. B. bei anorganischen Partikeln die Veraschung, d.h. das Veraschen der Proben mit anschließendem Auswiegen, gegebenenfalls zusätzlicher Bildanalyse oder Spektroskopie. Weiterhin sind bildanalytische Meßmethoden durch das Auszählen von Partikeln, Auswertungen hinsichtlich Anzahl oder Fläche in der Draufsicht oder Durchsicht zu nennen. Optische Methoden, wie z. B. die Bestimmung der Transmission können ebenfalls geeignet sein.

In thermoplastischen Kunststoff verarbeitbare handelsübliche Füllstoffe sind z. B. Mineralien wie Cristobalit, Aluminiumoxide, Aluminiumhydroxide und Derivate z. B. Alkali- und Erdalkalidoppeloxide und Erdalkalihydroxide, Tone, Siliciumdioxid in seinen verschiedenen Modifikationen, Silikate, Aluminosilikate, Carbonate, Phosphate, Sulfate, Sulfide, Oxide, Kohle, Metalle und Metallegierungen. Ferner sind synthetische Materialien wie Glasmehl, Keramik, Porzellan, Schlacke, feinverteiltes synthetisches SiO₂ geeignet. Genannt seien Kieselsäuremodifikationen wie Quarz (Quarzmehl) Tridymit und Cristobalit, sowie Kaolin, Talcum, Glimmer, Feldspat, Apatit, Baryte, Gips, Kreide, Kalkstein und Dolomit. Geeignet sind auch polymere Füllstoffe, wie z. B. allgemein Granulate, Körner oder Pulver aus anderen Thermoplasten, Elastomeren oder Duroplasten. Gegebenenfalls können auch Gemische von Füllstoffen angewendet werden.

Der Füllstoffanteil in den Extrudaten kann z. B. im Bereich von 0,001 bis 25 Gew.-% liegen. Die Füllstoffe können in den zweckmäßigen Korngrößen z. B. von 1 µm bis mehreren mm vorliegen und können z. B. nach den bekannten Verfahren durch Brechen und Mahlen erhalten werden.

Partikuläre Füllstoffe können z. B. nicht lösliche Farbstoffe sein, wie z. B. BaSO₄-Partikel sein, die eine Größe im Bereich von 1 bis 100, bevorzugt im Bereich von 5 bis 20 µm aufweisen und im thermoplastischen Kunststoff z. B. in Konzentrationen von 0,001 bis 30, bevorzugt 0,01 bis 5 Gew.-% enthalten sein können.

Ebenso können andere Füllstoffe oder Pigmente wie z. B. TiO₂ oder auch schlecht schmelzende Granulatkörner z. B. aus gegossenem, hochmolekularem Polymethylmethacrylat enthalten sein.

### Coextrudierte Folien oder Platten

Coextrudierte Folien oder Platten aus thermoplastischen Kunststoffen können unter Verwendung der erfindungsgemäß Extrusionsdüse in vorteilhafter Weise hergestellt werden.

Die, bezogen auf den Bahnquerschnitt, in der Mitte eines der beiden äußeren Drittel der Folien- oder Plattenbahn der extrudierten Folien- oder Plattenbahn meßbare Schichtdicke der Schichten, bei denen die Schmelzeeinspeisung in den Verteilerkanal seitlich in Bezug auf die durch den Düsenaustrittsbereich vorgegebene Extrusionsrichtung erfolgt, weicht dabei zu der in der Mitte der Bahn meßbaren Schichtdicke um nicht mehr als +/- 15 %, bevorzugt um nicht mehr als +/- 10 % ab.

Dies ist z. B. besonders vorteilhaft, wenn eine coextrudierte Schicht einen löslichen Zusatzstoff enthält, bei dem stark schwankende Schichtdicken zu Beeinträchtigungen führen können. Es kann sich dabei z. B. um einen löslichen Farbstoff handeln, bei dem stärker schwankende Schichtdicken zu unterschiedlichen Farbeindrücken führen, die vom menschlichen Auge leicht wahrgenommen werden können. Bei anderen Zusatzstoffen wie z. B. UV-Absorbern können aufgrund der erfindungsgemäß sehr gleichmäßigen Schichtdickenverteilung geringere Einsatzkonzentrationen gewählt werden, da eine Überkonzentration, die dünnere Bereiche sicher abdecken soll, nicht mehr vonnöten ist.

Die Abweichung kann ermittelt werden, indem man den kleineren Meßwert gleich 100 % setzt und den zweiten Meßwert in Beziehung dazu setzt. Die beschriebene maximale Abweichung gilt auch für Folien- oder Plattenbahnen, bei denen nachträglich ein gewisser Randbeschnitt, z. B. bis zu 15 % von beiden Seiten her vorgenommen wird, da auch in diesem Fall der besonders kritische Bereich in der Mitte der Kunststoffbahn mit den eher weniger kritischen Randbereichen verglichen wird.

Die Abweichung kann also ermittelt werden, indem man die Folien- oder Plattenbahn über die Breite in drei gleiche Teile teilt und die Schichtdicke einer coextrudierten Schicht einer Probe aus der Mitte des mittleren Drittels mit der Schichtdicke einer Probe derselben coextrudierten Schicht aus der Mitte eines der äußeren Drittel vergleicht, wobei die Beziehung hergestellt wird, indem der kleinere Meßwert gleich 100 % gesetzt wird.

Die Schichtdicke einer coextrudierten Schicht kann mit geeigneten analytischen Methoden, z. B. durch mikroskopisches Vermessen von Mikrotomschnitten, ermittelt werden.

## Patentansprüche

1. Extrusionsdüse zur Formgebung von extrudierten füllstoffhaltigen Schmelzen aus thermoplastischen Kunststoffen zu Folien- oder Plattenbahnen, deren Füllstoffverteilung im Endprodukt weitgehend gleichmäßig vorliegt, bestehend im wesentlichen aus dem Düsenkörper mit mindestens einer Öffnung zur Schmelzeeinspeisung in einen Verteilerkanal, der die Form eines halben Kleiderbügel-Verteilerkanals aufweist, und mit mindestens einer Stauinsel und einem breitschlitzförmigen Düsenaustrittsbereich, wobei die Schmelzeeinspeisung in den Verteilerkanal seitlich in Bezug auf die durch den Düsenaustrittsbereich vorgegebene Extrusionsrichtung erfolgt, wobei, bezogen auf die Ebene eines Querschnitts durch den Düsenkörper, entsprechend der Ebene, die durch die größere Extrudatfläche gebildet wird und durch die Breite des Düsenaustritts und den Verteilerkanal verläuft, die Richtung der Schmelzeeinspeisung in den Verteilerkanal und die Extrusionsrichtung einen Winkel von 30 bis 135 ° bilden,
**dadurch gekennzeichnet, daß**
der Verteilerkanalquerschnitt ein Aspektverhältnis von Kanalbreite zu Kanalhöhe von 3 bis 10 zu 1 aufweist.

2. Extrusionsdüse nach Anspruch 1, **dadurch gekennzeichnet, daß** der Querschnitt des Verteilerkanals, rechteckig, oval, elliptisch oder vieleckig ist oder eine Übergangsform der genannten Querschnitte aufweist.

3. Extrusionsdüse nach Anspruch 1 oder 2, **dadurch gekennzeichnet, daß** es sich um eine Extrusionsdüse zur Extrusion einer einzelnen Kunststoffschicht handelt.

4. Extrusionsdüse nach Anspruch 1 oder 2, **dadurch gekennzeichnet, daß** es sich um eine Coextrusionsdüse zur gleichzeitigen Extrusion mehrerer Kunststoffschichten aufeinander handelt, wobei die Schmelzeeinspeisung in den Verteilerkanal zumindest bei einer der Kunststoffschichten seitlich in Bezug auf die durch den Düsenaustrittsbereich vorgegebene Extrusionsrichtung erfolgt.

5. Verfahren zur Formgebung von extrudierten füllstoffhaltigen Schmelzen aus thermoplastischen Kunststoffen zu Folien- oder Plattenbahnen, deren Füllstoffverteilung im Endprodukt weitgehend gleichmäßig vorliegt wobei eine Extrusionsdüse gemäss einem oder mehreren der Ansprüche 1-4 verwendet wird, in an sich bekannten Weise durch Extrusion oder Coextrusion zur Herstellung von Folien oder Platten aus thermoplastischen Kunststoff, enthaltend einen partikulären Füllstoff.

6. Verfahren nach Anspruch 5, **dadurch gekennzeichnet, daß** man eine Extrusionsdüse einsetzt, bei der der Querschnitt des Verteilerkanals, rechteckig, oval, elliptisch oder vieleckig ist oder eine Übergangsform der genannten Querschnitte aufweist.

7. Verwendung nach Anspruch 5 oder 6, **dadurch gekennzeichnet, daß** man eine Extrusionsdüse einsetzt, bei der es sich um eine Extrusionsdüse zur Extrusion einer einzelnen Kunststoffschicht handelt.

8. Verwendung nach Anspruch 5 oder 6, **dadurch gekennzeichnet, daß** man eine Extrusionsdüse einsetzt, bei der es sich um eine Coextrusionsdüse zur gleichzeitigen Extrusion mehrerer Kunststoffschichten aufeinander handelt, wobei die Schmelzeeinspeisung in den Verteilerkanal zumindest bei einer der Kunststoffschichten seitlich in Bezug auf die durch den Düsenaustrittsbereich vorgegebene Extrusionsrichtung erfolgt.

## Claims

1. Extrusion die for the shaping of extruded filler-containing melts of thermoplastic materials into film or sheet webs, whose filler distribution in the end product is substantially uniform, substantially comprising the die body with at least one orifice for the melt feed into a manifold which has the shape of half a coat-hanger manifold and with at least one restricting island and a slot-shaped die outlet region, the melt feed into the manifold taking place laterally with respect to the direction of extrusion predetermined by the die outlet region, with respect to the plane of a cross section through the die body, which corresponds to the plane that is formed by the relatively large extrudate area and runs through the width of the die outlet and the manifold, the direction of the melt feed into the manifold and the direction of extrusion form an angle of from 30 to 135°, **characterized in that** the manifold cross section has an aspect ratio of manifold width to manifold height of from 3 to 10 to 1.

2. Extrusion die according to Claim 1, **characterized in that** the cross section of the manifold is rectangular, oval, elliptical or polygonal or has a transitional form of the cross sections mentioned.

3. Extrusion die according to Claim 1 or 2, **characterized in that** it is an extrusion die for the extrusion of a single layer of plastic.

4. Extrusion die according to Claim 1 or 2, **characterized in that** it is a coextrusion die for the simultaneous extrusion of a number of layers of plastic one on top of the other, the melt feed into the manifold taking place laterally with respect to the direction of extrusion predetermined by the die outlet region, at least in the case of one of the layers of plastic.

5. Process for the shaping of extruded filler-containing melts of thermoplastic materials into film or sheet webs, whose filler distribution in the end product is substantially uniform, wherein an extrusion die according to one or more of Claims 1 to 4 is used, in a manner known per se by extrusion or coextrusion, for producing films or sheets of thermoplastic material containing a particulate filler.

6. Process according to Claim 5, **characterized in that** an extrusion die is used, in which the cross section of the manifold is rectangular, oval, elliptical or polygonal or has a transitional form of the cross sections mentioned.

7. Use according to Claim 5 or 6, **characterized in that** the extrusion die used is an extrusion die for the extrusion of a single layer of plastic.

8. Use according to Claim 5 or 6, **characterized in that** the extrusion die used is a coextrusion die for the simultaneous extrusion of a number of layers of plastic one on top of the other, the melt feed into the manifold taking place laterally with respect to the direction of extrusion predetermined by the die outlet region, at least in the case of one of the layers of plastic.

## Revendications

1. Filière d'extrusion pour le moulage de fontes extrudées contenant une matière de charge à partir de matières plastiques thermoplastiques pour donner des feuilles ou des plaques en continu, leur répartition de matière de charge dans le produit final étant en grande partie régulière, constituée essentiellement du corps de filière avec au moins une ouverture pour l'injection de fonte dans un canal de distribution présentant la forme d'un canal de distribution en demi-cintre et avec au moins un îlot de retenue et un secteur de sortie de filière de forme plate, dans laquelle l'injection de fonte dans le canal de distribution a lieu latéralement par rapport à la direction d'extrusion déterminée grâce au secteur de sortie de filière, dans laquelle, par rapport au plan d'une coupe transversale à travers le corps de filière, correspondant au plan qui est formé par la plus grande surface d'extrudat et qui traverse la largeur de la sortie de filière et le canal de distribution, la direction de l'injection de fonte dans le canal de distribution et la direction de l'extrusion forment un angle de 30 à 135°,
**caractérisée en ce que**
la coupe transversale du canal de distribution présente un rapport d'aspect de la largeur de canal sur la hauteur de canal de 3 à 10 sur 1.

2. Filière d'extrusion selon la revendication 1, **caractérisée en ce que** la coupe transversale du canal de distribution est rectangulaire, ovale, elliptique ou polygonale ou présente une forme de transition des coupes transversales citées.

3. Filière d'extrusion selon la revendication 1 ou 2, **caractérisée en ce qu'**il s'agit d'une filière d'extrusion pour l'extrusion d'une couche de matière plastique individuelle.

4. Filière d'extrusion selon la revendication 1 ou 2, **caractérisée en ce qu'**il s'agit d'une filière de coextrusion pour l'extrusion simultanée de plusieurs couches de matières plastiques les unes sur les autres, dans laquelle l'injection de fonte dans le canal de distribution a lieu au moins pour une des couches de matières plastiques de manière latérale par rapport à la direction d'extrusion déterminée grâce au secteur de sortie de filière.

5. Procédé pour le moulage de fontes extrudées contenant une matière de charge à partir de matières plastiques thermoplastiques pour donner des feuilles ou des plaques en continu, leur répartition de matière de charge dans le produit final étant en grande partie régulière, dans lequel une filière d'extrusion selon une ou plusieurs des revendications 1 à 4 est utilisée, de manière connue en soi par extrusion ou coextrusion, pour la fabrication de feuilles ou de plaques à partir de matières plastiques thermoplastiques, contenant une matière de charge particulaire.

6. Procédé selon la revendication 5, **caractérisé en ce qu'**une filière d'extrusion est utilisée, dans laquelle la coupe transversale du canal de distribution est rectangulaire, ovale, elliptique ou polygonale, ou présente une forme de transition des coupes transversales citées.

7. Utilisation selon la revendication 5 ou 6, **caractérisée en ce qu'**une filière d'extrusion est utilisée, ladite filière d'extrusion étant une filière d'extrusion pour l'extrusion d'une couche de matière plastique individuelle.

8. Utilisation selon la revendication 5 ou 6, **caractérisée en ce qu'**une filière d'extrusion est utilisée, ladite filière d'extrusion étant une filière de coextrusion pour l'extrusion simultanée de plusieurs couches de matières plastiques les unes sur les autres, l'injection de fonte ayant lieu dans le canal de distribution au moins pour une des couches de matières plastiques de manière latérale par rapport à la direction d'extrusion déterminée grâce au secteur de sortie de filière.
